# EUROPÄISCHE PATENTANMELDUNG

(11) **EP 4 806 813 A1**
(43) Veröffentlichungstag der Anmeldung: **16.09.2026**
(21) Anmeldenummer: 26152735.2
(22) Anmeldetag: 19.01.2026
(51) Int. Cl.: B65G 47/88

(54) **ELEKTROMAGNETISCHER STOPPER, INSBESONDERE ZUM STOPPEN, VEREINZELN, POSITIONIEREN UND HALTEN VON GEGENSTÄNDEN AUF EINER TRANSPORTSTRECKE**

(30) Priorität: 12.03.2025 DE 102025109522
(71) Anmelder: Kendrion (Donaueschingen/Engelswies) GmbH, 78166 Donaueschingen (DE)
(72) Erfinder: Wickboldt, Oliver, 23714 Malente (DE)
(74) Vertreter: Westphal, Mussgnug & Partner Patentanwälte mbB

(57) **Zusammenfassung**

Die vorliegende Erfindung betrifft einen elektromagnetischen Stopper (1; 100), insbesondere zum Vereinzeln, Positionieren und/oder Halten von Gegenständen auf einer Transportstrecke, aufweisend ein Gehäuse (10),ein erster Hebelarm (20) und ein dritter Hebelarm (40; 140), wobei der erste Hebelarm (20) über ein erstes Gelenk (25) und der dritte Hebelarm (40; 140) über ein drittes Gelenk (45) schwenkbar an dem Gehäuse (10) angeordnet sind, ein zweiter Hebelarm (30), wobei der zweite Hebelarm (30) über ein erstes Verbindungsgelenk (35) schwenkbar an dem ersten Hebelarm (20) und über ein drittes Verbindungsgelenk (37) schwenkbar an dem dritten Hebelarm (40) angeordnet ist, ein Aktor (60), der mit dem ersten Hebelarm (20) oder dem zweiten Hebelarm (30) mechanisch verbunden ist, und zwischen einer Stoppstellung und einer Offenstellung bewegbar ist und ein Anschlagelement (70), das in Stoppstellung zumindest teilweise aus dem Gehäuse (10) ragt, wobei das Anschlagelement (70) an dem dritten Hebelarm (40) angeordnet ist, wobei das dritte Gelenk (45) eine dritte Gelenkachse (46) und das dritte Verbindungsgelenk (37) eine dritte Verbindungsgelenkachse (38) aufweist und wobei die dritte Gelenkachse (46) und die dritte Verbindungsgelenkachse (38) beabstandet zueinander angeordnet sind.

## Beschreibung

Die Erfindung betrifft einen elektromagnetischen Stopper, insbesondere zum Stoppen, Vereinzeln, Positionieren und Halten von Gegenständen auf einer Transportstrecke, gemäß den Merkmalen des Patentanspruchs 1.

Elektromagnetische Stopper werden häufig in automatisierten Montagelinien in der Fabrikautomation und Prozessautomation sowie in Sortier- und Logistiksystemen eingesetzt, um Gegenstände, insbesondere Werkstückträger, auf der Transportstrecke zu stoppen, zu vereinzeln, zu positionieren oder zu halten.

Elektromagnetische Stopper sind seit längerem im Stand der Technik bekannt. Nachteilig an den bisherigen elektromagnetischen Stopper ist, dass diese auf eine Lösung für die jeweilige Anwendung spezialisiert sind und somit keine Modularität innerhalb einer Produktpalette gegeben ist, ohne den elektromagnetischen Stopper komplett neu zu konstruieren. Zudem führt der komplizierte Aufbau, insbesondere bei der Verwendung von Dämpfungselementen, zu einem höheren Montageaufwand und damit zu höheren Kosten. Ebenso führen die komplizierteren Konstruktionen der bisherigen elektromagnetischen Stopper zu einer höheren Fehleranfälligkeit im Betrieb.

Diese Probleme werden durch einen elektromagnetischen Stopper mit den Merkmalen des Patentanspruchs 1 gelöst.

Vorteilhafte Ausgestaltungen und Weiterbildungen der Erfindung sind in den abhängigen Ansprüchen angegeben.

Erfindungsgemäß ist demnach ein elektromagnetischer Stopper, insbesondere zum Stoppen oder Vereinzeln von Gegenständen auf einer Transportstrecke mit einem Gehäuse, ein erster Hebelarm und ein dritter Hebelarm, wobei der erste Hebelarm über ein erstes Gelenk und der dritte Hebelarm über ein drittes Gelenk schwenkbar an dem Gehäuse angeordnet sind, ein zweiter Hebelarm, wobei der zweite Hebelarm über ein erstes Verbindungsgelenk schwenkbar an dem ersten Hebelarm und über ein drittes Verbindungsgelenk schwenkbar an dem dritten Hebelarm angeordnet ist, ein Aktor, der mit dem ersten Hebelarm oder dem zweiten Hebelarm mechanisch verbunden ist, und zwischen einer Stoppstellung und einer Offenstellung bewegbar ist, ein Anschlagelement, das in Stoppstellung zumindest teilweise aus dem Gehäuse ragt, das Anschlagelement an dem dritten Hebelarm angeordnet ist, wobei das dritte Gelenk eine dritte Gelenkachse und das dritte Verbindungsgelenk eine dritte Verbindungsgelenkachse aufweist, wobei die dritte Gelenkachse und die dritte Verbindungsgelenkachse beabstandet zueinander angeordnet sind.

Ein Vorteil dieser beabstandeten Gelenkachsen besteht darin, dass der entstehende Hebelmechanismus ein einfaches Design ermöglicht, um das Anschlagelement zwischen Stoppstellung und Offenstellung zu bewegen. Ein größerer Abstand der Gelenkachsen reduziert die erforderliche Auslenkung des Aktors und erhöht damit die mechanische Stabilität des gesamten elektromagnetischen Stoppers.

Der Erfindung liegt der Gedanke zugrunde, dass der dritte Hebelarm einfach montierbar und demontierbar ist, wobei an dem dritten Hebelarm das Anschlagelement und vorzugsweise ein Dämpfungselement angeordnet ist. Je nach Anwendungsfall kann dann der entsprechende Hebelarm kostengünstig ausgetauscht werden.

Darüber hinaus beruht die Erfindung auf der Idee, den mechanischen Aufbau des elektromagnetischen Stoppers möglichst einfach zu gestalten, um die Fehleranfälligkeit zu verringern und die Austauschbarkeit, insbesondere des dritten Hebelarms, auf ein Minimum zu reduzieren.

Die Längsachse des elektromagnetischen Stoppers ist vorzugsweise als die Achse definiert, die parallel zur Transportrichtung des Gegenstandes auf der Transportstrecke verläuft.

Die Höhenachse des elektromagnetischen Stoppers ist vorzugsweise als die Achse definiert, die die Transportstrecke sowie die Längsachse senkrecht schneidet.

Die Querachse des elektromagnetischen Stoppers ist vorzugsweise als die Achse definiert, die die Längsachse sowie die Höhenachse senkrecht schneidet.

Vorteilhafterweise sind das erste Verbindungsgelenk und das drittes Verbindungsgelenk in zwei Raumrichtungen linear bewegbar. Zudem ermöglichen das erste Verbindungsgelenk und das dritte Verbindungsgelenk eine translatorische Bewegung des zweiten Hebelarms. Dadurch kann sich der zweite Hebelarm innerhalb des Gehäuses des elektromagnetischen Stoppers zumindest teilweise frei bewegen. Die lineare Bewegung erfolgt vorzugsweise in Richtung der Längsachse sowie der Höhenachse. Durch die daraus resultierende hohe Beweglichkeit des zweiten Hebelarmes ist ein Verkanten desselben mit anderen Komponenten der elektromagnetischen Stopper nahezu ausgeschlossen. Außerdem ist bei einer solchen Konfiguration der Aufbau des elektromagnetischen Stoppers besonders einfach.

Bevorzugterweise sind das Anschlagelement und der dritte Hebelarm einstückig ausgebildet. Dadurch können der dritte Hebelarm und das Anschlagelement aus einem Stück gefertigt werden, was besonders kostengünstig und montagefreundlich ist. Durch die Einstückigkeit ist zudem die Anzahl der Bauteile, insbesondere im Bereich der Transportstrecke, geringer, was den Einsatz in rauer Umgebung begünstigt.

Gemäß einer vorteilhaften Weiterbildung der Erfindung ist das Anschlagelement über ein viertes Gelenk schwenkbar am dritten Hebelarm angeordnet. Durch die Schwenkbewegung kann der Gegenstand beim Auftreffen auf das Anschlagelement der Richtung des Gegenstandes über eine vorgegebene Strecke folgen und so den Aufprall des Gegenstandes zumindest teilweise abfangen. Dadurch wird eine Beschädigung des Gegenstandes vermieden.

Nach einer besonders bevorzugten Ausgestaltung der Erfindung weisen das dritte Gelenk, das dritte Verbindungsgelenk und das vierte Gelenk zueinander beabstandete Gelenkachsen auf. Der Abstand zwischen dem vierten Gelenk und dem dritten Gelenk ist vorzugsweise größer als der Abstand zwischen dem vierten Gelenk und dem dritten Verbindungsgelenk. Das Verhältnis dieser Abstände beträgt vorzugsweise das Zwei- bis Sechsfache. Das vierte Gelenk ist vorzugsweise an einem Ende des dritten Hebelarms angeordnet, wobei das dritte Gelenk am anderen Ende des dritten Hebelarms angeordnet ist. Das dritte Verbindungsgelenk ist dazwischen angeordnet.

Vorteilhafterweise ist an dem dritten Hebelarm oder innerhalb des dritten Hebelarms ein Dämpfungselement angeordnet. Das Dämpfungselement liegt mit seinem beweglichen Bereich unmittelbar am Anschlagelement an. Das Dämpfungselement kann in einer Kavität des dritten Hebelarms angeordnet sein. Das Dämpfungselement kann als mechanisches Dämpfungselement, insbesondere als Feder-Dämpfungselement oder als Gummi-Dämpfungselement ausgebildet sein. Auch kann das Dämpfungselement eine hydraulische, pneumatische oder magnetische Dämpfung aufweisen. Das Dämpfungselement ist innerhalb oder an dem dritten Hebelarm unmittelbar verbaut. Das hat den Vorteil, dass das Dämpfungselement keinen eigenen Schwenkmechanismus in Form eines eigenen Gelenks benötigt. Dies reduziert den Montageaufwand erheblich. Zudem ist durch den Austausch des dritten Hebelarms eine hohe Modularität und Konfigurierbarkeit möglich. Das Dämpfungselement hat den Vorteil, dass die kinetische Energie des Gegenstands auf der Transportstrecke durch das Dämpfungselement schonend absorbiert wird.

Bevorzugterweise weist das Anschlagelement ein erstes freies Ende und ein zweites freie Ende auf, wobei das erste freie Ende in Stoppstellung aus dem Gehäuse ragt und dass das zweite freie Ende unmittelbar an dem Dämpfungselement, vorzugweise an dem beweglichen Bereich des Dämpfungselements, anliegt. Das erste freie Ende tritt dabei in Stoppstellung mit dem Gegenstand in Kontakt. Der Aufbau ist daher sehr einfach gehalten. Insbesondere muss das Dämpfungselement nicht mechanisch fest mit dem Anschlagelement verbunden sein, z. B. durch ein weiteres Gelenk, was den Montageaufwand reduziert und Toleranzen zulässt.

Nach einer besonders vorteilhaften Weiterbildung der Erfindung weist der elektromagnetische Stopper die Längsachse auf, die parallel und in Richtung einer Transportstrecke verläuft, wobei der mit dem ersten Hebelarm oder dem zweiten Hebelarm verbundene Teil des Aktors parallel in Richtung der Längsachse bewegbar ist. Der Aktor, der eine größere räumliche Ausdehnung annehmen kann, ist vorzugsweise parallel zum dritten Hebelarm angeordnet. Da der dritte Hebelarm, wie oben erläutert, ebenfalls vorzugsweise eine gewisse Länge aufweist, wird dadurch eine kompaktere Bauweise des elektromagnetischen Stoppers erreicht. Der Aktor kann auch parallel zur Höhenachse oder zur Querachse angeordnet sein.

Gemäß einer vorteilhaften Weiterbildung der Erfindung verläuft eine gedachte dritte Hilfslinie, die das dritte Gelenk und das vierte Gelenk, und vorzugsweise das dritte Verbindungsgelenk, in Stoppstellung schneidet, nahezu parallel zu der Längsachse des elektromagnetischen Stoppers. Die gedachte dritte Hilfslinie kann dabei durch den jeweiligen Gelenkmittelpunkt gelegt werden. Vorteilhaft ist, dass die Ausdehnung des elektromagnetischen Stoppers entlang der Höhenachse kompakter ausgestaltet werden kann.

Vorteilhafterweise ist in der Stoppstellung ein erster Abstand, der der Abstand zwischen der dritten Gelenkachse des dritten Gelenks und der dritten Verbindungsgelenkachse des dritten Verbindungsgelenks, ungefähr gleich einem zweiten Abstand, der der Abstand zwischen der dritten Verbindungsgelenkachse und einer ersten Gelenkachse des ersten Gelenks ist. Dadurch ist der elektromagnetische Stopper äußerst kompakt realisierbar. Zudem werden die einzelnen Hebel der jeweiligen Hebelarme ideal ausgenutzt.

Bevorzugterweise der Aktor als elektromagnetischer Aktor ausgebildet ist. Der Aktor kann auch ein pneumatischer oder hydraulischer Aktor sein. Elektromagnetische Aktoren werden seit langem bei Stopper verwendet und sind bewährt.

Gemäß einer besonders bevorzugten Ausgestattung der Erfindung ist der elektromagnetische Stopper in der Längsachse länger als in der Höhenachse. Häufig ist der Platz in Richtung der Bewegungsrichtung des Gegenstands auf der Transportstrecke aufgrund der größeren Transportstrecken kaum limitiert. Der elektromagnetische Stopper kann auch in der Längsachse gleich lang wie in der Höhenachse sein. Der elektromagnetische kann auch Stopper in der Längsachse kleiner als in der Höhenachse sein.

Nachfolgend werden unter Bezugnahme auf die begleitenden Zeichnungen zwei Ausführungsbeispiele der vorliegenden Erfindung im Detail beschrieben. Es zeigen:
- Fig. 1: zeigt einen Längsschnitt eines elektromagnetischen Stoppers ohne Dämpfungselement, und
- Fig. 2: zeigt einen Längsschnitt eines elektromagnetischen Stoppers mit Dämpfungselement und schwenkbar am dritten Hebelarm angeordnetes Anschlagelement.

Gleiche oder funktional gleiche Teile oder Merkmale werden in der nachfolgenden detaillierten Beschreibung der Figuren mit den gleichen Bezugszeichen gekennzeichnet. Ebenso sind in den Figuren nicht alle gleichen oder funktional gleichen Teile oder Merkmale mit einer Bezugsziffer versehen.

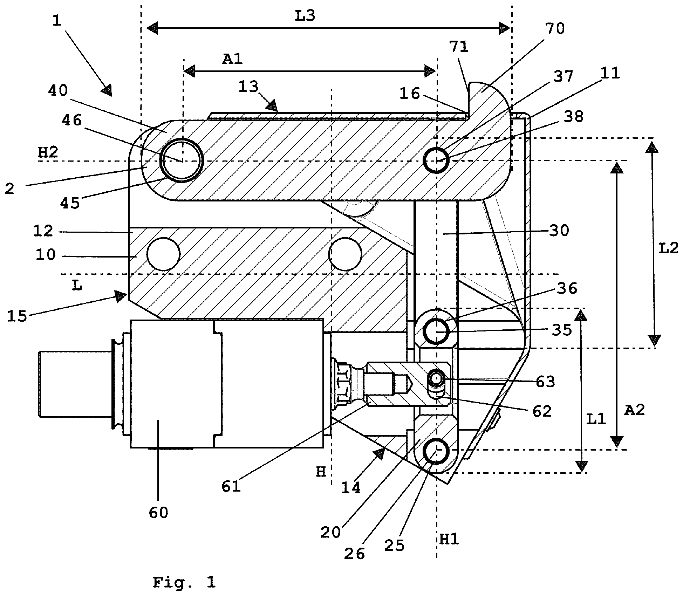

Fig. 1 zeigt einen Längsschnitt eines elektromagnetischen Stoppers 1. Der elektromagnetische Stopper 1 wird entlang einer Transportstrecke (nicht zu sehen) positioniert um Gegenstände (nicht zu sehen), die auf der Transportstrecke transportiert werden, zu stoppen, zu vereinzeln, zu positionieren oder zu halten.

Der elektromagnetische Stopper 1 ist aus einer Stoppstellung in eine Offenstellung überführbar und vice versa. In Fig. 1 ist der elektromagnetische Stopper 1 in Stoppstellung gezeigt.

Der elektromagnetische Stopper 1 weist eine Längsachse L, eine Querachse (nicht eingezeichnet) sowie eine Höhenachse H auf.

Der elektromagnetische Stopper 1 umfasst ein Gehäuse 10, einen elektromagnetischen Aktor 60, ein Hebelsystem 2 sowie ein Anschlagelement 70.

Das Gehäuse 10 weist eine Oberseite 13, eine Unterseite 14 sowie eine Seitenumwandung 15 auf. Die Oberseite 13 ist der Transportstrecke am nächsten angeordnet, wobei die Unterseite 14 der Oberseite 13 gegenüberliegend angeordnet ist.

Das Gehäuse 10 ist zweiteilig ausgebildet und weist ein erstes Gehäuseteil 11, welches bevorzugt eine Haube ist, und ein zweites Gehäuseteil 12, welches bevorzugt ein Grundblock ist, auf. Das Gehäuse 10 kann auch einteilig oder mehrteilig ausgebildet sein.

Das erste Gehäuseteil 11, welches vorzugsweise die Haube ist, ist aus Kunststoff ausgebildet. Das erste Gehäuseteil 10 kann auch aus Aluminium, Stahl oder einem anderen Material sein.

Das zweite Gehäuseteil 12, welches vorzugsweise der Grundblock ist, ist aus Aluminium ausgebildet. Das zweite Gehäuseteil 12 kann auch aus Kunststoff, Stahl oder einem anderen Material sein.

Das erste Gehäuseteil 11 und das zweite Gehäuseteil 12 sind miteinander mechanisch verbunden, insbesondere verschraubt. Durch das Verschrauben ist eine einfache Montage und Demontage des ersten Gehäuseteils 11 von dem zweiten Gehäuseteil 12 möglich. Das erste Gehäuseteil 11 und das zweite Gehäuseteil 12 können auch vernutet, verklemmt, verklebt oder anderweitig miteinander mechanisch verbunden sein.

Die Oberseite 13 des Gehäuses 10 ist zumindest teilweise durch das erste Gehäuseteil 11 ausgebildet. Die Unterseite 14 des Gehäuses 10 ist durch den zweiten Gehäuseteil 12 ausgebildet.

Innerhalb des Gehäuses 10 ist das Hebelsystem 2 angeordnet. Innerhalb des Gehäuses 10 ist zumindest teilweise der elektromagnetische Aktor 60 angeordnet. Der elektromagnetische Aktor 60 ist parallel zu der Längsachse L des elektromagnetischen Stoppers 1 angeordnet.

Der elektromagnetische Aktor 60 weist einen Adapter 61 auf, der linear bewegbar ist. Vorzugsweise erfolgt die Bewegung des Adapters 61 entlang der Längsachse L des elektromagnetischen Stoppers 1.

Der elektromagnetische Aktor 60 kann eine Steuereinheit (nicht zu sehen) aufweisen. Die Steuereinheit kann innerhalb des elektromagnetischen Aktors 60 verbaut sein. Die Steuereinheit kommuniziert mit einer übergeordneten Steuerung (nicht zu sehen), die das Gesamtsystem der Transportstrecke steuert. Der elektromagnetische Aktor 60 kann Befehle auch direkt von einer übergeordneten Steuereinheit erhalten.

Der elektromagnetische Aktor 60 kann durch jede andere Betätigungseinrichtung ersetzt werden, die dazu geeignet ist, eine Kraft auf einen der Hebelarme 20, 30, 40 auszuwirken, sodass das Anschlagelement 70 aus der Stoppstellung in die Offenstellung und vice versa überführt werden kann.

Der elektromagnetische Aktor 60, insbesondere der Adapter 61 des elektromagnetischen Aktors 60, ist mit dem Hebelsystem 2 mechanisch gekoppelt.

Der Adapter 61 weist eine Langlochbohrung 62 auf, in welche ein erster Hebelarm 20 mit einem Stift 63 eingreift und den elektromagnetischen Aktor 60 mit dem ersten Hebelarm 20 mechanisch verbindet. Der Adapter 61 kann mit jedem anderen Hebelarm 30, 40 mechanisch verbunden sein.

Das Hebelsystem 2 umfasst den ersten Hebelarm 20, einen zweiten Hebelarm 30 und einen dritten Hebelarm 40.

Der erste Hebelarm 20, der zweite Hebelarm 30 und der dritte Hebelarm 40 sind stabförmig ausgebildet, wobei die Enden des ersten Hebelarms 20 und die Enden des zweiten Hebelarms 30 abgerundet sind. Zumindest ein Ende des dritten Hebelarms 40 ist ebenfalls abgerundet.

Der erste Hebelarm 20 ist an einem seiner Enden über ein erstes Gelenk 25 schwenkbar an dem Gehäuse 10 in der Nähe der Unterseite 14 des Gehäuses 10 angeordnet. Der erste Hebelarm 20 weist eine Länge L1 auf. Der erste Hebelarm kann ausschließlich eine rotatorische Bewegung durchführen, da er fest mit dem Gehäuse 10 verbunden ist.

Der dritte Hebelarm 40 ist an einem seiner Enden über ein drittes Gelenk 45 schwenkbar an dem Gehäuse 10 in der Nähe der Oberseite 13 des Gehäuses 10 angeordnet. Der dritte Hebelarm 40 weist eine Länge L3 auf. Der dritte Hebelarm kann ausschließlich eine rotatorische Bewegung durchführen, da er fest mit dem Gehäuse 10 verbunden ist.

Der zweite Hebelarm 30 ist an einem seiner Enden über ein erstes Verbindungsgelenk 35 an dem ersten Hebelarm 20 schwenkbar angeordnet. Der zweite Hebelarm 30 ist an einem anderen Ende über ein drittes Verbindungsgelenk 37 an dem dritten Hebelarm 40 schwenkbar angeordnet. Der zweite Hebelarm 30 weist eine Länge L2 auf. Der zweite Hebelarm 30 kann eine rotatorische Bewegung durchführen. Darüber hinaus kann der zweite Hebelarm 30 eine translatorische Bewegung in zwei Raumrichtungen in Abhängigkeit des ersten Hebelarms 20 und des zweiten Hebelarms 30 durchführen.

Die Länge L1 des ersten Hebelarms ist kleiner als die Länge L2 des zweiten Hebelarms 30. Die Länge L3 des dritten Hebelarms 40 ist größer als die Länge L2 des zweiten Hebelarms 30. Die Gesamtlänge der Länge L1 des ersten Hebelarms 20 und der Länge L2 des zweiten Hebelarms 30 entspricht in grob der Länge L3 des dritten Hebelarms 40.

Der zweite Hebelarm 30 ist ungefähr eineinhalb Mal länger als der erste Hebelarm 20. Der dritte Hebelarm 40 ist ungefähr eineinhalb Mal länger als der zweite Hebelarm 30.

Die Länge L1 des ersten Hebelarms 20 kann auch länger sein als die Länge L2 des zweiten Hebelarms 30 oder die Länge L3 des dritten Hebelarms 40. Die Länge L2 des zweiten Hebelarms 30 kann auch länger sein als die Länge L1 des ersten Hebelarms 20 oder die Länge L3 dritten Hebelarms 40.

Das erste Gelenk 25, das dritte Gelenk 45, das erste Verbindungsgelenk 35 und das dritte Verbindungsgelenk 37 sind vorzugsweise als Drehgelenke ausgebildet. Das erste Gelenk 25, das dritte Gelenk 45, das erste Verbindungsgelenk 35 und das dritte Verbindungsgelenk 37 können auch als Kugelgelenke oder andere Gelenktypen ausgebildet sein.

In Stoppstellung ist ein erster Abstand A1, der der Abstand zwischen der dritten Gelenkachse 46 des dritten Gelenks 45 und der dritten Verbindungsgelenkachse 38 des dritten Verbindungsgelenks 37, grob gleich einem zweiten Abstand A2, der der Abstand zwischen der dritten Verbindungsgelenkachse 38 und einer ersten Gelenkachse 26 des ersten Gelenks 25 ist, ist. Der erste Abstand A1 kann auch ein bis dreimal größer sein als der zweite Abstand A2. Der erste Abstand A1 kann auch ein bis dreimal kleiner sein als der zweite Abstand A2.

In Stoppstellung ist das erste Gelenk 25, das erste Verbindungsgelenk 35, das dritte Verbindungsgelenk 37, insbesondere die jeweiligen Gelenkachsen 26, 36, 38, entlang einer erste gedachten Hilfslinie H1 fluchtend zueinander angeordnet, wobei die erste gedachte Hilfslinie H1 parallel zur Höhenachse H des elektromagnetischen Stopper 1 angeordnet ist. Die erste gedachte Hilfslinie H1 kann einen Winkel zur Längsachse L des elektromagnetischen Stoppers 1 aufweisen, der vorzugsweise bei 90 ± x Grad liegt, wobei x kleiner gleich 15 Grad ist.

In Stoppstellung ist das dritte Gelenk 45 und das dritte Verbindungsgelenk 37, insbesondere deren Gelenkachsen 38, 46, entlang einer zweiten gedachten Hilfslinie H2 fluchtend zueinander angeordnet. Die zweite gedachte Hilfslinie H2 ist parallel zur Längsachse L des elektromagnetischen Stoppers 1 angeordnet. Die zweite gedachte Hilfslinie H2 kann auch einen Winkel zur Höhenachse H des elektromagnetischen Stoppers 1 aufweisen, der vorzugsweise bei 90 ± y Grad liegt, wobei y kleiner gleich 15 Grad ist..

In Stoppstellung schneiden sich die erste gedachte Hilfslinie H1 und die zweite gedachte Hilfslinie H2 vorzugsweise in einem rechten Winkel. Das hat den Vorteil, dass dadurch der elektromagnetische Stopper extrem kompakt ausgebildet werden kann. Die erste gedachte Hilfslinie H1 und die zweite gedachte Hilfslinie H2 können auch einen Winkel zueinander aufweisen, der von 90 Grad verschieden ist. Dieser Winkel weist bevorzugterweise einen Winkel zwischen 75 und 105 Grad auf.

In Offenstellung weisen der erste Hebelarm 20 und der zweite Hebelarm 30 einen Winkel zwischen 90 und 145 Grad zueinander auf. Bevorzugterweise weisen der erste Hebelarm 20 und der zweite Hebelarm 30 in Offenstellung einen Winkel von 120 bis 130 Grad zueinander auf. Der erste Hebelarm 20 und der zweite Hebelarm 30 können auch andere Winkel in der Offenstellung zueinander aufweisen.

In Offenstellung weist der zweite Hebelarm 30 und der dritte Hebelarm 40 einen Winkel zwischen 90 und 145 Grad auf. Bevorzugterweise weisen der zweite Hebelarm 30 und der dritte Hebelarm 40 einen Winkel von 120 Grad zueinander auf. Der zweite Hebelarm 30 und der dritte Hebelarm 40 können auch andere Winkel in der Offenstellung zueinander aufweisen.

Das Anschlagelement 70 ist an dem dritten Hebelarm 40 angeordnet. Das Anschlagelement 70 und der dritte Hebelarm 40 sind einstückig ausgebildet. Insbesondere sind das Anschlagelement 70 und der dritte Hebelarm 40 aus einem Werkstück gefertigt.

Das Anschlagelement 70 weist eine Stoppseite 71 auf. Die Stoppseite 71 des Anschlagelements 70 und der dritte Hebelarm 40 weisen einen rechten Winkel auf. Die Stoppseite des Anschlagelements 70 und der dritte Hebelarm 30 können auch einen stetigen, abgerundeten oder abgewickelten Übergang aufweisen.

Das Anschlagelement 70 ist aus Sicht des dritten Gelenks 45 hinter dem dritten Verbindungsgelenk 37 angeordnet.

Die Überführung des elektromagnetischen Stoppers 1 aus der Stoppstellung in die Offenstellung wird durch einen entsprechenden Befehl an den elektromagnetischen Aktor 60 gestartet. Der Adapter 61 des elektromagnetischen Aktors 60 bewegt sich parallel zu der Längsachse L des elektromagnetischen Stoppers 1. Die Bewegungsrichtung des Adapters 61 ist dabei die Bewegungsrichtung des Gegenstandes auf der Transportstrecke. Die Bewegungsrichtung des Adapters 61 kann auch entgegen der Bewegungsrichtung des Gegenstandes auf der Transportstrecke sein. Der Adapter 61 kann auch eine gänzlich andere Bewegungsrichtung aufweisen.

Der Adapter 61 ist mechanisch mit dem ersten Hebelarm 20 verbunden. Der erste Hebelarm 20 nimmt die Bewegung des Adapters 61 auf. Der erste Hebelarm 20 führt daraufhin eine Rotationsbewegung aus, die den zweiten Hebelarm 30 in Richtung der Unterseite 14 des Gehäuses 10 und in die gleiche Richtung wie die Bewegungsrichtung des Adapters 61 kippen lässt.

Der zweite Hebelarm 30, der über das dritte Verbindungsgelenk 37 mit dem dritten Hebelarm 40 mechanisch verbunden ist, lässt den dritten Hebelarm 40 in Richtung Unterseite 14 des Gehäuses 10 abkippen.

Das Anschlagelement 70 ragt in der Stoppstellung aus einer Öffnung 16 des Gehäuses 10 in die Transportstrecke heraus. In der Stoppstellung taucht das Anschlagelement 70 durch das Abkippen des dritten Hebelarms 40 vollständig in das Gehäuse 10 ein.

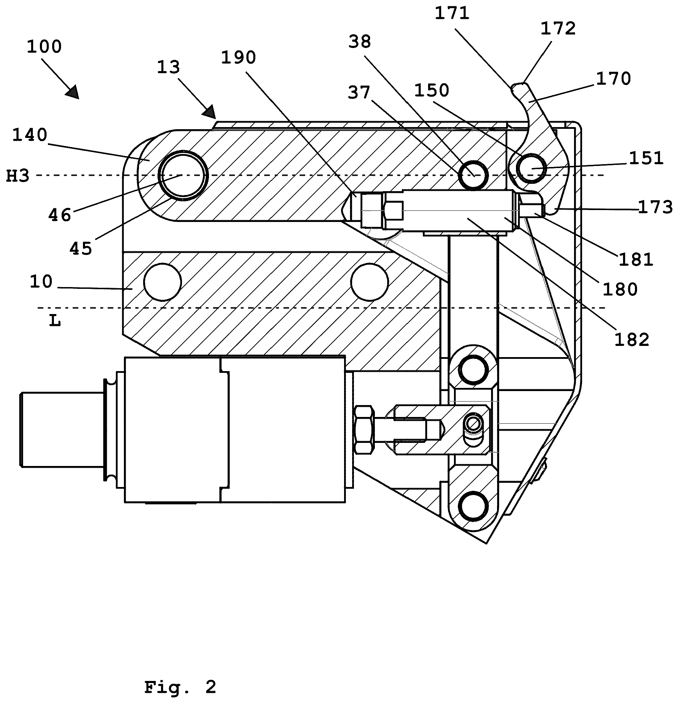

Fig. 2 zeigt ein zweites Ausführungsbeispiel eines elektromagnetischen Stoppers 100 mit Dämpfungselement 180 und schwenkbar an einem dritten Hebelarm 140 angeordneten Anschlagelement 170.

Der elektromagnetische Stopper 100 ist bis auf das Dämpfungselement 180 und das schwenkbare Anschlagelement 170 gleich aufgebaut wie der elektromagnetische Stopper 1 aus dem Ausführungsbeispiel der Fig. 1. Daher wird auf den vorherigen Vortrag verwiesen und es werden lediglich die neuen Merkmale beschrieben.

Der dritte Hebelarm 140 weist eine Kavität 190 auf. Das Dämpfungselement 180 ist innerhalb der Kavität 190 angeordnet und mit dem dritten Hebelarm 140 mechanisch verbunden. Das Dämpfungselement 180 kann mit dem dritten Hebelarm 140 verschraubt, verspannt, verklebt oder anderweitig mechanisch verbunden sein. Das Dämpfungselement 180 kann auch an dem dritten Hebelarm 140 angeordnet sein.

Das Dämpfungselement 180 ist als mechanisches Dämpfungselement ausgebildet. Das mechanische Dämpfungselement 180 weist ein Federelement (nicht zu sehen) mit einer Rückstellkraft auf. Das Dämpfungselement 180 kann auch ein Gummi oder eine hydraulische oder pneumatische Dämpfung aufweisen.

Das Dämpfungselement 180 weist ein Schutzgehäuse 182 auf, in welchem das Federelement angeordnet ist. Das Schutzgehäuse 182 schützt das Federelement vor Umwelteinflüssen. Das Dämpfungselement 180 weist einen beweglichen Bereich 181 auf, der kraftschlüssig mit dem Federelement verbunden ist und zumindest teilweise außerhalb des Gehäuses 10 angeordnet ist.

An dem dritten Hebelarm 140 ist ein Anschlagelement 170 angeordnet. Das Anschlagelement 170 ist schwenkbar am dritten Hebelarm 140 über ein viertes Gelenk 150 angeordnet. Das vierte Gelenk 150 ist aus Sicht des dritten Gelenks 45 hinter dem dritten Verbindungsgelenk 37 angeordnet.

Das Anschlagelement 170 weist eine einzige vierte Gelenkachse 151 auf, um welche das Anschlagelement 170 schwenkbar ist. Dadurch ist die Anbindung des Anschlagelements 170 an dem dritten Hebelarm 140 besonders einfach gehalten.

Das vierte Gelenk 150 ist gleich oder kann gleich wie die Gelenke im ersten Ausführungsbeispiel ausgebildet sein.

Das dritte Gelenk 45, das dritte Verbindungsgelenk 37 und das vierte Gelenk 150 mit einer vierten Gelenkachse 151 weisen zueinander beabstandete Gelenkachsen 38, 46, 151 auf. Die vierte Gelenkachse 151 ist näher an der Oberseite 13 des Gehäuses 10 angeordnet als alle anderen Gelenkachsen.

Eine dritte gedachte Hilfslinie H3, die das dritte Gelenk 45 und das vierte Gelenk 150, und vorzugsweise das dritte Verbindungsgelenk 37, in Stoppstellung schneidet, verläuft nahezu parallel oder parallel zu der Längsachse L des elektromagnetischen Stoppers 1.

das Anschlagelement 170 weist ein erstes freies Ende 172 und ein zweites freie Ende 173 auf, wobei das erste freie Ende 172 in Stoppstellung aus dem Gehäuse 10 ragt und dass das zweite freie Ende 173 unmittelbar an dem Dämpfungselement 180, vorzugweise an dem beweglichen Bereich 181 des Dämpfungselements 180, anliegt. Dadurch ist eine mechanische Verbindung im Montageprozess zwischen Dämpfungselement 180 und Anschlagselement 170 nicht notwendig, was einen erheblichen zeitvorteil mit sich bringt.

Das erste freie Ende 172 bildet eine Stoppseite 171 des Anschlagselements 170 aus, an welchem ein Gegenstand in Stoppstellung festgehalten wird.

Das erste Ausführungsbeispiel aus Fig. 1 ist einfach in das zweite Ausführungsbeispiel aus Fig. 2 überführbar, indem der dritte Hebelarm 40; 140 ausgetauscht wird. Alle Änderungen zwischen dem ersten und zweiten Ausführungsbeispiel sind unmittelbar mit dem dritten Hebelarm 40; 140 verknüpft. Dadurch ist durch die einfach Austauschbarkeit des dritten Hebelarms 40; 140 eine hohe Modularität des elektromagnetischen Stoppers 1; 100 gegeben, was die Produktionskosten senkt und die Flexibilität gegenüber Kundenaufträgen erhöht.

### Bezugszeichenliste

- 1: Elektromagnetischer Stopper
- 2: Hebelsystem

- 10: Gehäuse
- 11: Erstes Gehäuseteil
- 12: Zweites Gehäuseteil
- 13: Oberseite
- 14: Unterseite
- 15: Seitenumwandung
- 16: Öffnung

- 20: Erste Hebelarm

- 25: Erstes Gelenk
- 26: Erste Gelenkachse

- 30: Zweite Hebelarm

- 35: Erstes Verbindungsgelenk
- 36: Erste Verbindungsgelenkachse
- 37: Drittes Verbindungsgelenk
- 38: Dritte Verbindungsgelenkachse

- 40: Dritte Hebelarm

- 45: Dritte Gelenk
- 46: Dritte Gelenkachse

- 60: Aktor
- 61: Adapter
- 62: Langlochbohrung
- 63: Stift

- 70: Anschlagelement
- 71: Stoppseite

- 100: Elektromagnetischer Stopper

- 140: Dritter Hebelarm

- 150: Viertes Gelenk
- 151: Vierte Gelenkachse

- 170: Anschlagelement
- 171: Stoppseite
- 172: Erstes freies Ende
- 173: Zweites freies Ende

- 180: Dämpfungselement
- 181: Beweglicher Bereich
- 182: Schutzgehäuse

- L: Längsachse
- H: Höhenachse

- H1: Erste Hilfslinie
- H2: Zweite Hilfslinie
- H3: Dritte Hilfslinie

- A1: Erster Abstand
- A2: Zweiter Abstand
- L1: Länge erster Hebelarm
- L2: Länge zweiter Hebelarm
- L3: Länge dritter Hebelarm

## Patentansprüche

1. Elektromagnetischer Stopper (1; 100), insbesondere zum Vereinzeln, Positionieren und/oder Halten von Gegenständen auf einer Transportstrecke, aufweisend:
- ein Gehäuse (10),
- ein erster Hebelarm (20) und ein dritter Hebelarm (40; 140), wobei der erste Hebelarm (20) über ein erstes Gelenk (25) und der dritte Hebelarm (40; 140) über ein drittes Gelenk (45) schwenkbar an dem Gehäuse (10) angeordnet sind,
- ein zweiter Hebelarm (30), wobei der zweite Hebelarm (30) über ein erstes Verbindungsgelenk (35) schwenkbar an dem ersten Hebelarm (20) und über ein drittes Verbindungsgelenk (37) schwenkbar an dem dritten Hebelarm (40) angeordnet ist,
- ein Aktor (60), der mit dem ersten Hebelarm (20) oder dem zweiten Hebelarm (30) mechanisch verbunden ist, und zwischen einer Stoppstellung und einer Offenstellung bewegbar ist, und
- ein Anschlagelement (70; 170), das in Stoppstellung zumindest teilweise aus dem Gehäuse (10) ragt,
**dadurch gekennzeichnet, dass**
- das Anschlagelement (70; 170) an dem dritten Hebelarm (40; 140) angeordnet ist, und
- wobei das dritte Gelenk (45) eine dritte Gelenkachse (46) und das dritte Verbindungsgelenk (37) eine dritte Verbindungsgelenkachse (38) aufweist, wobei die dritte Gelenkachse (46) und die dritte Verbindungsgelenkachse (38) beabstandet zueinander angeordnet sind.

2. Elektromagnetischer Stopper (1; 100) nach Anspruch 1,
**dadurch gekennzeichnet, dass** das erste Verbindungsgelenk (35) und das dritte Verbindungsgelenk (37) in zwei Raumrichtungen linear bewegbar sind.

3. Elektromagnetischer Stopper (1; 100) nach einem der vorherigen Ansprüche,
**dadurch gekennzeichnet, dass** das Anschlagelement (70) und der dritte Hebelarm (40) einstückig ausgebildet sind.

4. Elektromagnetischer Stopper (1; 100) nach einem der vorherigen Ansprüche,
**dadurch gekennzeichnet, dass** das Anschlagelement (170) über ein viertes Gelenk (150) schwenkbar am dritten Hebelarm (140) angeordnet ist.

5. Elektromagnetischer Stopper (1; 100) nach einem der vorherigen Ansprüche,
**dadurch gekennzeichnet, dass** das dritte Gelenk (45), das dritte Verbindungsgelenk (37) und das vierte Gelenk (150) mit einer vierten Gelenkachse (151) zueinander beabstandete Gelenkachsen (38, 46, 151) aufweisen.

6. Elektromagnetischer Stopper (1; 100) nach einem der vorherigen Ansprüche,
**dadurch gekennzeichnet, dass** an dem dritten Hebelarm (140) oder innerhalb des dritten Hebelarms (140) ein Dämpfungselement (180) angeordnet ist.

7. Elektromagnetischer Stopper (1; 100) nach einem der vorherigen Ansprüche,
**dadurch gekennzeichnet, dass** das Anschlagelement (170) ein erstes freies Ende (172) und ein zweites freie Ende (173) aufweist, wobei das erste freie Ende (172) in Stoppstellung aus dem Gehäuse (10) ragt und dass das zweite freie Ende (173) unmittelbar an dem Dämpfungselement (180), vorzugweise an einem beweglichen Bereich (181) des Dämpfungselements (180), anliegt.

8. Elektromagnetischer Stopper (1; 100) nach einem der vorherigen Ansprüche,
**dadurch gekennzeichnet, dass** der elektromagnetische Stopper (1; 100) eine Längsachse (L) aufweist, die parallel und in Richtung einer Transportstrecke verläuft, wobei der mit dem ersten Hebelarm (20) oder dem zweiten Hebelarm (30) verbundene Teil des Aktors (60) parallel in Richtung der Längsachse (L) bewegbar ist.

9. Elektromagnetischer Stopper (1; 100) nach einem der vorherigen Ansprüche,
**dadurch gekennzeichnet, dass** eine gedachte dritte Hilfslinie (H3), die das dritte Gelenk (45) und das vierte Gelenk (150), und vorzugsweise das dritte Verbindungsgelenk (37), in Stoppstellung schneidet, nahezu parallel zu der Längsachse (L) des elektromagnetischen Stoppers (1; 100) verläuft.

10. Elektromagnetischer Stopper (1; 100) nach einem der vorherigen Ansprüche,
**dadurch gekennzeichnet, dass** in der Stoppstellung ein erster Abstand (A1), der der Abstand zwischen der dritten Gelenkachse (46) des dritten Gelenks (45) und der dritten Verbindungsgelenkachse (38) des dritten Verbindungsgelenks (37), ungefähr gleich einem zweiten Abstand (A2), der der Abstand zwischen der dritten Verbindungsgelenkachse (38) und einer ersten Gelenkachse (26) des ersten Gelenks (25) ist, ist.

11. Elektromagnetischer Stopper (1; 100) nach einem der vorherigen Ansprüche,
**dadurch gekennzeichnet, dass** der Aktor (60) als elektromagnetischer Aktor (60) ausgebildet ist.

12. Elektromagnetischer Stopper (1; 100) nach einem der vorherigen Ansprüche,
**dadurch gekennzeichnet, dass** der elektromagnetische Stopper (1; 100) in der Längsachse (L) länger ist als in einer Höhenachse (H).
